# EUROPEAN PATENT SPECIFICATION

(11) **EP 0 303 116 B1**
(45) Date of publication and mention of the grant of the patent: **12.01.1994**
(21) Application number: 88112283.2
(22) Date of filing: 29.07.1988
(51) Int. Cl.: G01N 27/18, G01N 25/00

(54) **Sensor used for electrical heating measurement**
Sensor zur Messung durch elektrische Beheizung
Capteur pour mesure par chauffage électrique

(30) Priority: 12.08.1987 JP 201628/87
(43) Date of publication of application: 15.02.1989
(73) Proprietor: SNOW BRAND MILK PRODUCTS CO., LTD., Sapporo-shi, Hokkaido 065 (JP)
(72) Inventor: Hori, Tomoshige, Kitamoto-shi Saitama-ken (JP); Shiinoki, Yasuhiko, Shinagawa-ku Tokyo (JP); Itoh, Kensuke, Kodaira-shi Tokyo (JP)
(74) Representative: Hoffmeister, Helmut, Dr. Dipl.-Phys.

(56) References cited:
- EP-A- 150 111
- EP-A- 0 214 874
- DE-A- 2 327 662
- JP-A-62 056 849
- US-A- 4 042 901
- PATENT ABSTRACTS OF JAPAN vol. 8, no. 101 (P-273)(1538), 12th May 1984; JP-A-59 013 929

## Description

### BACKGROUND OF THE INVENTION

This invention relates to a sensor for measuring properties of many kinds of fluid by so-called electrical heating measurement.

The "fluid" termed in the present specification means all kinds of fluid being of a gaseous substance, a liquid substance or a solid substance such as powder or of two or more of these substances as well as a fluid of the type whose phase changes with time.

The inventors of this application have already proposed, in Japanese Patent Laid-open Application No. 62(1987)-56849, a sensor for measurement by electrical heating having a core rod covered with an electrically insulating member, a thin metal wire wound about the core, and an electrically insulating member covering the thin metal wire.

In the above-mentioned traditional sensor, the metal thin wire is several times longer than the sensor since the metal thin wire is wound around the core rod. With this, the sensor has some advantages such that the electric resistance increases according to the length of wire and therefore a large heat flux per unit length of the sensor probe can be obtained by a small electric current. Further, the sensor in itself is not easily cut-broken or bent.

On the other hand, since the metal thin wire is wound around the core rod and spirally bent, a stress-strain occurs in the metal thin wire. And so there is a disadvantage such that, when annealing treatment is performed in order to prevent the stress-strain thereof, the electric resistance thereof is largely changed from the beginning and is to vary significantly with time.

The change of electric resistance of each sensor is different in each other and so it is difficult to determine the specific value common to each sensor.

Therefore it is difficult to produce a sensor having a desirable electric resistance after preparing. The sensor is not interchangeable since each sensor has different electric resistance and so a relational equation between the electric resistance and properties of materials must be determined with each sensor, respectively.

### SUMMARY OF THE INVENTION

Therefore an object of the present invention is to provide a sensor having no stress-strain in a metal thin wire and an electric value constant with time after an annealing treatment.

The object of the present invention can be attained by a sensor used for electrical heating measurement in accordance with Claim 1.

According to the present invention, a stress-strain in a metal thin wire does not occur as different from the traditional sensor formed by winding a metal thin wire around a core rod. Therefore a interchangeable sensor having a desired electric resistance can be obtained. Further in case of production on a large scale, each sensor can have stable electric resistance and so any adjustment is unnecessary.

Further according the other aspect of the present invention, in addition to the above-mentioned technical means, a sensor used for electrical heating measurement wherein the metal thin wires thinner than the through holes are inserted into and through the through holes, spaced between the metal thin wires and the through holes are filled with ceramics powder and the powder is treated by heating at a temperature lower than the sintering temperature thereof, is provided.

In accordance with the second technical means, since in case of volume expansion with heating, the metal thin wire is not pressed to the inside of the rod, the electric resistance of the sensor cannot be influenced by the stress-strain in the metal thin wire.

Furthermore, when two or more metal thin wire inserted into the rod in the longitudinal direction thereof are connected in series, the electric resistance increases to that extent, that as in the traditional sensor, a large heat flux per unit length of the sensor probe can be obtained by a small electric current.

### BRIEF DESCRIPTION OF THE DRAWINGS

The above and other objects of the invention will be seen by reference to the description taken in connection with the accompanying drawings, in which:
Fig. 1 is a perspective view, partly in cross section, of a sensor according to the present invention,
Fig. 2 is a perspective view, partly broken away to show interior construction of a rod,
Fig. 3 is a side elevation view of a rod shown in Fig. 2,
Fig. 4 is a perspective view, partly broken away to show interior construction of a sensor element,
Fig. 5 is a longitudinal section of a cover,
Fig. 6 is a elevation view, partly in cross section, of a sensor according to the present invention.

### DESCRIPTION OF THE PREFERRED EMBODIMENT

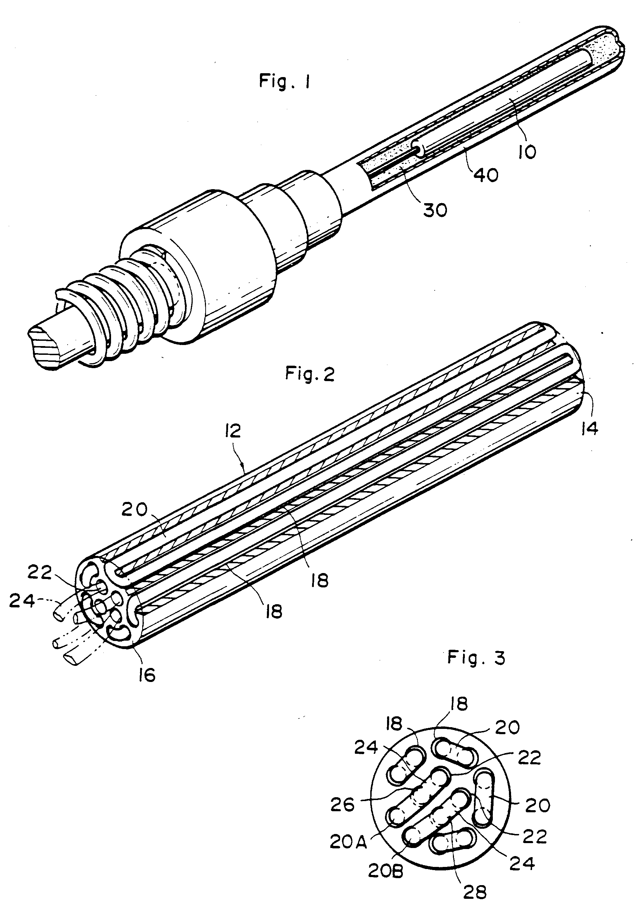

Fig. 1 shows a sensor according to the present invention, which is formed by covering a sensor element 10 with a cover 40.

Firstly, the sensor element 10 will be described hereinafter.

A rod 12, as described in Fig. 2, has ten through holes 18 for metal thin wires, which through holes pass through the rod in the longitudinal direction and equally spaced in each other along the circumference of the rod. Further four through holes 22 provided adjacent to the center portion of the rod and inside the through holes 18 for the metal thin wires, also pass through the rod 12. Plural straight metal thin wire are inserted into and pass through the through holes 18 for metal thin wires.

The metal thin wires are bent in U-shape and a pair of end portions of each metal thin wire are inserted into and pass through a pair of through holes adjacent to each other from a back end surface 16 to a front end surface 14 of the rod 12. In the example in Fig. 2, five U-shape metal thin wires 20 are inserted into and pass through each pair of through holes for metal thin wires, and at the front end surface an end portion of one metal thin wire is properly connected by the spot welding in an end portion of other metal thin wire adjacent to the above end portion, respectively. With this, metal thin wires 20 are connected in series and at the front end surface 14 one resistance line is formed between an end portion 20A and an end portion 20B.

On the other hand, two straight lead wires 24, 24 are inserted into and pass through the further through holes 22 for lead wire 24. The lead wires 24 are also bent in U-shape by the same way as the above-mentioned method of the metal thin wire 20 and a pair of end portions of each lead wire are inserted into and pass through a pair of through holes adjacent to each other, but, from the front end surface 14 to the back end surface 16 of the rod 12 different from the way of the metal thin wire 20. At the front end surface 14 the end portions 20A, 20B of the metal thin wires 20 are connected with contact points 26, 28 of the two lead wires 24, 24 by spot welding.

With this, the two lead wires 24, 24 are connected with the contact points 26 and 28 in order to measure the electric resistance of the metal thin wire 20 by the four terminal method. For example, the thermal change of the atmosphere of sensor can be exactly known by connecting a current source and a voltmeter with these lead wires, respectively, electrifying adequately the metal thin wires 20, simultaneously measuring a voltage between the contact points 26 and 28 and calculating a electric resistance of the metal thin wire 20.

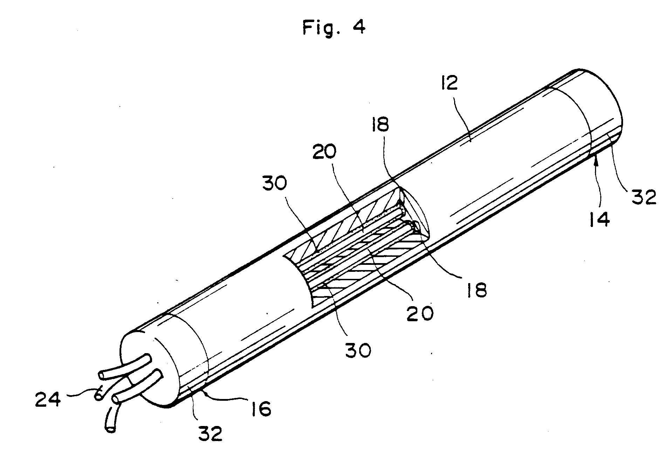

As shown in Fig. 4, the metal thin wire 20 and the lead wire 24 are slightly thinner than the through holes 18 and the further holes 22 for lead wire. Ceramics powder 30 are filled into a space in the through holes 18 and the further holes 22 for lead wire. A glass sealing 32 is provided to both the front end surface 14 and the back end surface 16 of the rod 12 in order to prevent a leakage of the ceramics powder 30.

The filled ceramics powder 30 is treated at low temperature. In this specification, the "low temperature" means temperature lower than a sintering temperature of the ceramics.

With this, the ceramics powder 30 treated at low temperature can prevent an eccentricity of the metal thin wire 20. Further when a volume of the metal thin wire 20 is expanded with heat, since this state is easily destroyed, the metal thin wire 20 is not pressed and therefore any stress-strain occurs in the metal thin wire 20.

In the sensor element 10 of the above-mentioned example, the rod 12 is a column having 1.4mm of diameter and 100mm of length and made of a ceramics having a high purity ( more than 99.9% ) of a sintered crystallized alumina, the metal thin wire 20 is a platinum wire having 0.110mm of diameter and the lead wire 22 is a platinum wire having 0.15mm of diameter. Metal thin wire holes 18 having 0.16mm of diameter are provided along the rod 12, respectively and further holes having 0.16mm of diameter for lead wire are provided in the center of the rod 12.

The rod 12 of ceramics provides high workability and high strength and the rod thereof does not be changed in quality and deformed. Further the coefficient of volumetric expansion thereof is more or less same as that of platinum. The metal thin wire 20 of platinum wire provide a stability on standing of the electric resistance thereof.

Further an electric resistance of the sensor is predetermined as 10Ω , the platinum wire having 0.110mm of diameter is 10Ω /m and therefore the desired value is determined according to these values. In case of a production on a large scale, an error of electric resistance of each sensor element 10 is about ±0.1% and the electric resistance having high stability both with time and with heating-cooling procedure can be obtained.

Further the lead wire 24 is inserted at once into the rod 10 to permit the lead wire 24 not to be directly exposed to the sensor element 10 in order to prevent a heat outflow from the lead wire 24. With this the heat of the metal thin wire 20 cannot be radiated out through the lead wire 24.

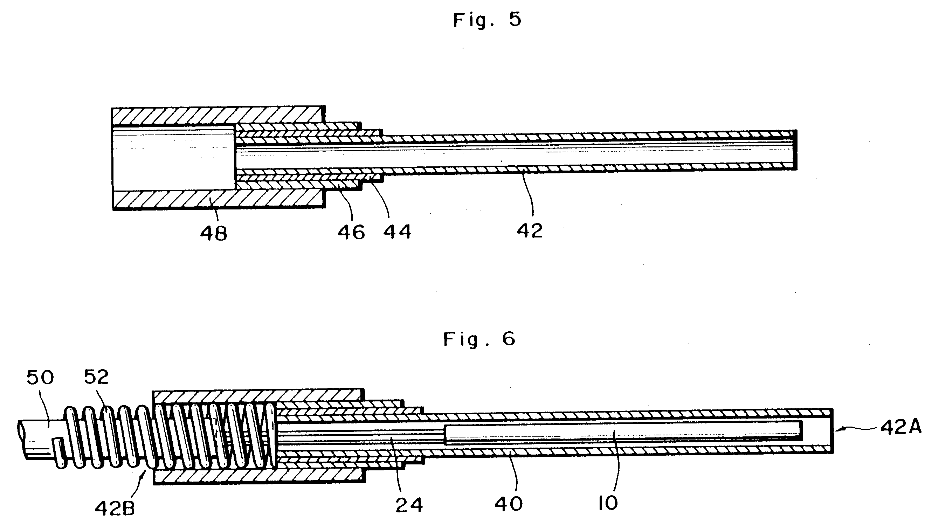

Nextly, a cover 40 covering the sensor element 10 will be described. As shown from Fig. 5, short pipes 44, 46 and a pipe 48 are provided to a back end portion of a pipe 42 having slightly larger inner diameter than the sensor element 10.

These pipes are fixed uniformly by calking from the circumference thereof.

For example, such as stainless (SUS 316L), platinum palladium, titanium are used as a pipe material, however the pipe material is optionally determined in accordance with conditions.

After inserting the sensor element 10 into the pipe 42 adjacent of the front end thereof, sucking it from the front end of the pipe 42A and filling a resin into the cover 40 from the back end 42B thereof to electrically insulating it from an open air.

Ceramics powder, magnesium oxide powder and so on can be filled into the cover 40 in place of resin.

As desired, the lead wire 24 can be connected with a cable 50 having enough strength in the cover 40 and a spring means 52 for guarding the cable 50 can be provided so as to obtain a sensor having excellent durability.

The cover 40 described in the above is only one example used as an electrically insulating cover for the sensor element 10 and so it never limit the construction of the present invention with the exception of the usage for an electrically insulating cover of the sensor element 10.

As clarified from the above description, the sensor according to the present invention can be applied for a usage of a resistance temperature sensor to measure the atmosphere of the sensor by electrifying the metal thin wire, simultaneously measuring the voltage applied to the metal thin wire to obtain the change of the electric resistance.

As the other application, two sensor according to the present invention is applied in the fluid and one is used as a heat build-up material and another is used as a resistance temperature sensor for measuring thermal conductivity so as to determine many kinds of properties of fluids according to these values. Further the present invention can be applied in many kinds of field as desired.

While there has been described what is at present considered to be preferred embodiment of the invention, it will be understood that various modifications may be made therein, and it is intended to cover in the appended claims all such modifications as fall within the scope of the invention as defined in the claims.

## Claims

1. A sensor for determining physical properties of a fluid by the electrically heating measuring method by measuring the temperature difference between the surrounding fluid and the wire in which an electrical current source and a voltmeter are connected to a thin metal resistance wire line arranged around a centre and with an electrical insulating member covering the resistance wire line, and said centre, said metal resistance wire line and the insulating member are forming an elongated rod, characterized in that
(a) the end surfaces (16, 14) of said rod (12) are provided with holes (18) extending straightly through the rod in the longitudinal direction thereof and through which thin metal wires (20) are inserted from one end surface to the other and connected in series, so that the resistance wire line is formed,
(b) the rod is compact and the holes (18) are spaced from each other along the circumference of the rod,
(c) lead wires (24, 24) are arranged in further holes (22) in the rod apart from the holes (18) of the thin metal wires (20),
(d) the further holes (22) for lead wires (24, 24) are disposed adjacent to the centre of the rod,
(e) at the one end of rod (surfaces 14) the thin metal wires (20) are connected to the lead wires (24, 24), in order to measure the electric resistance of the metal resistance wire line by the four terminal method.

2. Sensor according to claim 1, characterized in that the space around the thin metal wires (20) within the holes (18) is filled with ceramics powder (30).

3. Sensor according to claim 2, characterized in that the ceramics power (30) is heat treated at a temperature lower than the sintering temperature thereof.

4. Sensor according to claim 1, characterized in that the sensor is disposed in a cover (14) larger than the sensor and the space between the sensor and the cover is filled with a resin.

## Patentansprüche

1. Sensor zur Bestimmung physikalischer Eigenschaften eines Fluids durch die elektrische Wärmemeßmethode durch Messung der Temperaturdifferenz zwischen dem umgebenden Fluid und einem Draht, bei der eine elektrische Stromquelle und ein Voltmeter mit einer dünnen Metallwiderstandsdrahtleitung verbunden sind, die um ein Zentrum angeordnet sind, und mit einem elektrischen Isolatorelement, das die Widerstandsdrahtleitung und das Zentrum bedeckt, wobei die Metallwiderstandsdrahtleitung und der Isolator einen länglichen Bolzen bilden,
dadurch gekennzeichnet, daß
(a) die Endfläche (16, 14) des Bolzens (12) mit Bohrungen (18) versehen sind, die sich in gerader Linie durch den Bolzen in dessen Longitudinalrichtung erstrecken und durch die dünne Metalldrähte (20) von einer Stirnfläche zur anderen und in Serie verbunden eingesetzt sind, so daß die Widerstandsdrahtleitung gebildet ist,
(b) der Bolzen kompakt ist und daß die Bohrungen (18) entlang der Peripherie des Bolzens voneinander Abstand haben,
(c) Zuleitungsdrähte (24, 24) in weiteren Bohrungen (22) im Bolzen vorhanden sind, die getrennt von den Bohrungen (18) für die dünnen Metalldrähte (20) sind,
(d) die weiteren Bohrungen (22) für die Zuleitungsdrähte (24, 24) im Bereich des Zentrums des Bolzens angeordnet sind,
(e) an einem Ende des Bolzens (Fläche 14) die dünnen Metalldrähte (20) mit den Zuleitungsdrähten (24, 24) verbunden sind, um den elektrischen Widerstand der Metallwiderstandsdrahtleitung durch die Vier-Anschluß-Methode zu messen.

2. Sensor nach Anspruch 1, dadurch gekennzeichnet, daß der Raum um die dünnen Metalldrähte (20) innerhalb der Bohrungen (18) mit Keramik-Pulver (30) gefüllt ist.

3. Sensor nach Anspruch 2, dadurch gekennzeichnet, daß das Keramik-Pulver (30) bei einer Temperatur hitzebehandelt ist, die niedriger als die Sinter-Temperatur des Keramik-Pulvers ist.

4. Sensor nach Anspruch 1, dadurch gekennzeichnet, daß der Sensor in einer Hülle (14) angeordnet ist, die größer ist als der Sensor, und daß der Raum zwischen dem Sensor und der Hülle mit einem Harz gefüllt ist.

## Revendications

1. Un capteur de détermination de propriétés physiques d'un fluide par le procédé de mesure d'échauffement électrique en mesurant la différence de température entre le fluide environnant et le fil, dans lequel une source de courant électrique et un voltmètre sont reliés à une ligne en mince fil métallique de résistance, agencée autour d'un centre et pourvue d'un organe électriquement isolant couvrant la ligne de fil de résistance, et ledit centre, ladite ligne de fil métallique de résistance et l'élément isolant forment une tige allongée,
caractérisé en ce que
(a) les surfaces d'extrémité (16, 14) de ladite tige (12) comporte des trous (18) qui s'étendent droit à travers la tige dans la direction longitudinale de celle-ci et à travers lesquels les minces fils métalliques (20) sont insérés d'une surface d'extrémité jusqu'à l'autre et reliés en série, afin que la ligne de fil de résistance soit formée,
(b) la tige est compacte et les trous (18) sont espacés les uns des autres le long de la circonférence de la tige,
(c) des fils conducteurs (24, 24) sont agencés dans d'autres trous (22) ménagés dans la tige, séparés des trous (18) des minces fils métalliques (20),
(d) les autres trous (22), prévus pour les fils conducteurs (24,24), sont disposés près du centre de la tige,
(e) à une extrémité de la tige (surfaces 14) les minces fils métalliques (20 sont reliés aux fils conducteurs (24, 24) afin de mesurer par le procédé à quatre bornes la résistance électrique de la ligne de fil métallique de résistance.

2. Capteur selon la revendication 1, caractérisé en ce que l'espace entourant les minces fils métalliques (20) à l'intérieur des trous (18) est rempli de poudre de céramique (30).

3. Capteur selon la revendication 2, caractérisé en ce que la poudre de céramique (30) est traitée à chaud à une température inférieure à sa température de frittage.

4. Capteur selon la revendication 1, caractérisé en ce que le capteur est disposé dans un couvercle (14) plus grand que le capteur et l'espace entre le capteur et le couvercle est rempli d'une résine.
